Europäisches Patentamt

European Patent Office

Office européen des brevets

(19)

(11) **EP 0 816 834 A2**

(12) **EUROPEAN PATENT APPLICATION**

(43) Date of publication:
**07.01.1998 Bulletin 1998/02**

(51) Int Cl.6: **G01N 23/223**

(21) Application number: **97304505.7**

(22) Date of filing: **25.06.1997**

(84) Designated Contracting States:
**AT BE CH DE DK ES FI FR GB GR IE IT LI LU MC NL PT SE**

(30) Priority: **03.07.1996 GB 9613922**

(71) Applicant: **OXFORD ANALYTICAL INSTRUMENTS LIMITED**
**Witney, Oxon. OX8 1TL (GB)**

(72) Inventor: **Finney, Mark Simon**
**Faringdon, Oxon, SN7 8LU (GB)**

(74) Representative: **Skone James, Robert Edmund**
**GILL JENNINGS & EVERY**
**Broadgate House**
**7 Eldon Street**
**London EC2M 7LH (GB)**

(54) **X-ray fluorescence analysis**

(57)     A method of obtaining information concerning the content of an experimental sample. The method comprises:

(i) irradiating a standard sample with X-rays and monitoring fluorescent X-rays emitted by the standard sample to obtain a correction coefficient $I_{SID}$ related to the intensity of the monitored X-rays.

(ii) Irradiating the experimental sample under substantially the same experimental conditions as in step (i) with X-rays and monitoring fluorescent X-rays emitted by the experimental sample to obtain one or more experimental values $I_X$, each experimental value being related to the intensity of the monitored X-rays corresponding to a particular analyte.

(iii) Obtaining the information concerning the content of the experimental sample in accordance with an algorithm incorporating the experimental value $I_X$, a calibration curve for the or each analyte and the correction coefficient $I_{STD}$.

The correction coefficient $I_{STD}$ is used to correct for any difference between the experimental conditions prevailing in steps (i) and (ii) and the calibration experimental conditions associated with the calibration curve.

Fig.3.

EP 0 816 834 A2

Printed by Jouve, 75001 PARIS (FR)

## Description

The present invention relates to a method and apparatus for analysing an experimental sample, using X-ray fluorescence analysis.

The effect of air absorption of X-rays is negligible for many applications but becomes significant for k X-rays from elements with Z less than 27 and for L X-rays within the same energy range as the k lines. Barometric pressure and temperature have a direct effect on the amount of absorption by changing the air density in the X-ray path length.

Conventionally, this problem is minimised by purging the region between the X-ray tube, sample and detector with a gas that exhibits a lower attenuation than air. Typically, helium is used.

However, in certain applications, it may be difficult to obtain helium of the required purity in sufficient quantities, or the use of helium may simply be inconvenient.

A conventional method of analysing an experimental sample will involve:

(1) for each element (or analyte) being measured, generating a respective calibration curve representing the percentage concentration of the analyte as a function of X-ray intensity; and

(2) for each analyte X-ray intensity $I_x$ measured from an experimental sample, inputting the value $I_x$ to a respective calibration curve to generate the percentage concentration of the analyte in the experimental sample.

In accordance with a first aspect of the present invention, there is provided a method of obtaining information concerning the content of an experimental sample, the method comprising

(i) irradiating a standard sample with X-rays and monitoring fluorescent X-rays emitted by the standard sample to obtain a correction coefficient $I_{STD}$ related to the intensity of the monitored X-rays;

(ii) irradiating the experimental sample under substantially the same experimental conditions as in step (i) with X-rays and monitoring fluorescent X-rays emitted by the experimental sample to obtain one or more experimental values $I_x$, each experimental value being related to the intensity of the monitored X-rays corresponding to a particular analyte; and

(iii) obtaining the information concerning the content of the experimental sample in accordance with an algorithm incorporating the experimental value $I_x$, a calibration curve for the or each analyte and the correction coefficient $I_{STD}$,

wherein the correction coefficient $I_{STD}$ is used to correct for any difference between the experimental conditions prevailing in steps (i) and (ii) and the calibration experimental conditions associated with the calibration curve.

It has been found that errors associated with variations in experimental conditions may be minimised by carrying out a correction procedure using a standard sample. The composition of the standard sample in general is not related to the composition of the experimental sample, and any suitable standard sample with a significant measurable X-ray line can be used.

The experimental conditions may comprise the composition, humidity or density of the gas along the path of the X-rays.

Preferably, however, the experimental conditions comprises the sample temperature and/or the pressure along the path of the X-rays. In this case, the method compensates for pressure and/or temperature using a direct measurement of the standard sample, without the need for separate temperature and/or pressure readings. In addition, there is no longer a requirement of purging the apparatus with helium gas, allowing the experiment to be carried out in an uncontrolled atmosphere. By "uncontrolled" it should be understood that the atmosphere does not have to be of a known controlled composition although the pressure and/or temperature of the atmosphere may be controlled in some way (for instance by carrying out the method in an insulated or closed vessel), but in general the pressure and/or temperature may vary significantly without affecting the accuracy of the information obtained. This allows the experiment to be performed in a non-purged atmosphere. Typically the experiment is carried out in air, which is typically at barometric pressure.

In general, the experimental sample is irradiated shortly before or after the standard sample is irradiated, in order to ensure that no significant variation in the experimental conditions can occur between the two measurements. In the case, of temperature variation, the X-ray tube will tend to heat up the apparatus and therefore the two measurements generally need to be made within a few minutes of each other.

Each calibration curve is a conventional algorithm which expresses the information corresponding with a particular analyte (e.g. analyte concentration) as a function of the experimental value $I_x$. The calibration curve may be generated after steps (i) and (ii), but in general will be generated and stored prior to these steps. In this case, the or each calibration curve is typically stored as a look-up table or as a function which is carried out in software.

The calibration curve may be generated in a number of conventional ways, all of which will be associated with particular calibration experimental conditions. For example, the calibration curve may be generated by theoretical calculations for a particular set of experimental conditions (e.g. a known pressure $P_N$ and temperature $T_N$). Preferably, however, the method according to the present invention further comprises generating the calibration curve by irradiating a calibration sample having a known content under the calibration experimental conditions with X-rays and monitoring fluorescent X-rays emitted by the calibration sample to obtain a calibration coefficient related to the intensity of the monitored X-rays, and generating the calibration curve in accordance with the calibration coefficient. The calibration coefficient may be generated by performing a single calibration measurement to obtain a single point on the calibration curve, and constructing the rest of the calibration curve theoretically (for instance by defining the calibration curve as a straight line of predetermined slope passing through the calibration coefficient). Alternatively, a number of calibration samples of varying, known content may be irradiated to obtain a set of calibration coefficients, the calibration curve being generated by interpolation between the set of calibration coefficients.

The method typically further comprises irradiating the standard sample (or another sample of identical composition) under substantially the calibration experimental conditions with X-rays and monitoring fluorescent X-rays emitted by the standard sample to obtain a standard coefficient related to the intensity of the monitored X-rays, wherein the algorithm incorporates the standard coefficient which is used in conjunction with the correction coefficient to correct for any differences between the experimental conditions and the calibration experimental conditions.

Typically, the algorithm corrects for any difference between the experimental conditions and the calibration experimental conditions by modifying the experimental value $I_x$, for instance by multiplying the experimental value $I_x$ by the ratio of the standard coefficient and the correction coefficient. Alternatively, the algorithm may perform the correction by modifying the form of the calibration curve.

In accordance with a second aspect of the present invention, there is provided apparatus for obtaining information concerning the content of an experimental sample comprising means for irradiating the experimental sample; means for monitoring fluorescent X-rays emitted by the experimental sample to obtain one or more experimental values each experimental value being related to the intensity of the monitored X-rays corresponding to a particular analyte; and means for obtaining the information concerning the content of the experimental sample in accordance with a calibration algorithm which incorporates the experimental value, wherein in use the X-rays pass through air.

The apparatus of the present invention is typically operated in accordance with the method of the first aspect of the present invention. The pressure of the air may be controlled, but typically the apparatus is open to the atmosphere (resulting in the air being at barometric pressure).

A number of embodiments of the present invention will now be described with reference to the accompanying drawings, in which:

Figure 1 is a schematic diagram of the geometry of an X-ray analysis system according to the present invention;
Figure 2 illustrates the variation in total transmission at the detector with pressure and temperature;
Figure 3 illustrates a method according to the invention; and,
Figure 4 is a schematic illustration of the form of the calibration curve generated in Figure 3.

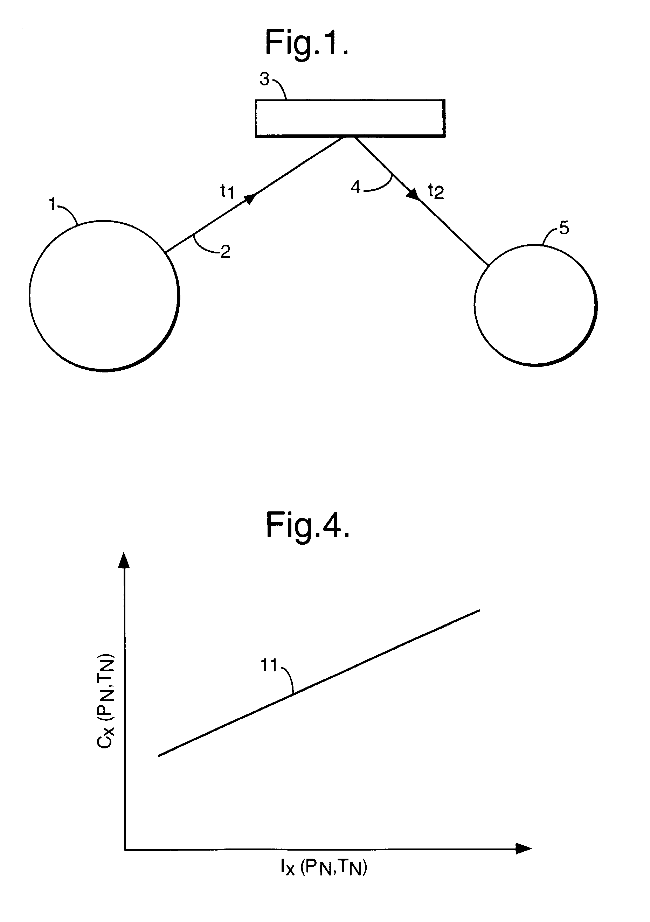

Referring to Figure 1, the apparatus comprises an X-ray tube 1, which preferably includes a palladium target. Primary X-rays 2 are emitted from the tube 1 and from there pass to a sample 3. Fluorescent (secondary) X-rays 4 emitted by the sample 3 are then detected by a gas filled detector 5 (preferably the gas is neon). The primary beam 2 has an average path length $t_1$. The secondary beam 4 has an average path length $t_2$. The detector 5 is connected to processing means (not shown) for computing and displaying experimental results as described in the following passages.

The paths of the primary beam 2 and secondary beam 4 are conventionally in a helium atmosphere. However, in the apparatus illustrated in Figure 1, the primary and secondary beams pass through air. Therefore, the pressure and temperature dependent attenuation due to the presence of air needs to be corrected as follows.

The density of dry air $\rho(P,T)$ in $gcm^{-3}$ is given by the following expression;

$$\rho(P,T) = \frac{0.001293}{(1+0.00367\,T)} \times \frac{P}{760} \tag{1}$$

where

P = atmospheric pressure (mm Hg)
T = atmospheric temperature (°C)

The effect of humidity adds a small correction to the calculated density which could be significant at high and low values of absolute humidity.

The equation for X-ray absorption by air is given by;

$$I(P,T) = I_o \exp[-\mu\rho(P,T)t] \tag{2}$$

where

I(P,T) = the transmitted intensity
$I_o$ = the incident intensity
$\mu$ = mass absorption coefficient of air (cm$^2$g$^{-1}$)
$\rho$ = density of air (gcm$^{-3}$)
t = X-ray path length in air (cm)

Firstly, we must consider what happens to the primary beam as it passes along the air path of average length $t_1$ and then what happens to the secondary beam as it passes along the air path of average length $t_2$. The two effects are multiplicative, i.e. if 90% of the tube intensity reaches the sample and 50% of the sample intensity reaches the detector then the total detected is 50% of 90% = 45%. This is ignoring thermal expansion and strain so that we can assume $t_1$ and $t_2$ stay constant. We are also assuming that the composition of air is constant and hence its mass absorption coefficient for a given analyte X-ray line does not change. Below is a list of mass attenuation coefficients calculated for a variety of analyte lines in air assuming air is composed of N(74%), 0(24%) and Ar(1.3%) by mass;

Al (k$\alpha$ = 1.487 keV) = 1019.3 cm$^2$ g$^{-1}$
Si (k$\alpha$ = 1.740 keV) = 653.8 cm$^2$ g$^{-1}$
S (kx = 2.307 keV) = 294.5 cm$^2$ g$^{-1}$
Pd (L$\alpha$ = 2.838 keV) = 164.5 cm$^2$ g$^{-1}$
Ca (k$\alpha$ = 3.690 keV) = 90.3 cm$^2$ g$^{-1}$
Fe (k$\alpha$ = 6.400 keV) = 19.2 cm$^2$ g$^{-1}$

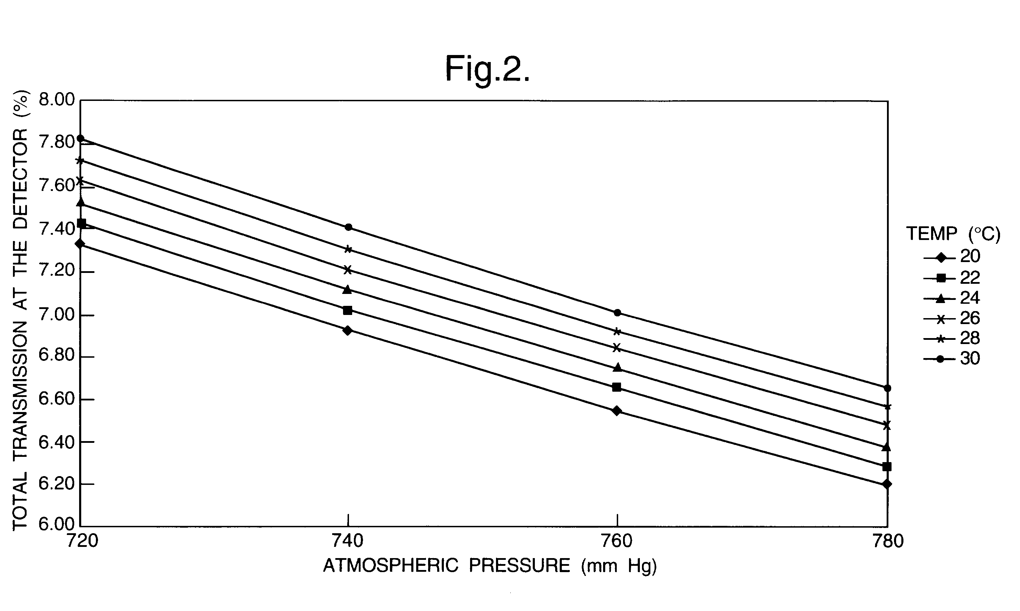

Therefore, using equations (1) & (2) and assuming $t_1$=2.5cm and $t_2$=1.3cm it is possible to calculate the total percentage transmission measured at the detector 5 for the ka lines as a function of pressure and temperature. Figure 2 shows a plot of the total transmission versus atmospheric pressure for Al k$\alpha$.

Using these calculations and plots it is possible to predict the way that the analyte line intensities vary as a function of pressure and temperature during a real measurement.

The following passage derives a barometric pressure and temperature correction factor using an independently measured standard.

First consider making a calibration of an analyte line in air at pressure $P_N$ and temperature $T_N$ and using the geometry
shown schematically in figure 1. Then the transmitted intensity at $P_N$ & $T_N$ of the tube primary beam, using equation (2), is given by:

$$I_P(P_N,T_N) = I_{OP}\exp[-\mu_P\rho(P_N, T_N) t_1] \tag{3}$$

where

$I_P(P_N,T_N)$ = the transmitted primary intensity in air at $P_N$ & $T_N$.
$I_{OP}$ = the transmitted intensity of the primary beam in vacuum.
$\mu_P$ = the mass attenuation coefficient of the primary bea in air (assuming the X-rays are monochromatic).
$\rho(P_N,T_N)$ = the air density at $P_N$ & $T_N$.
$t_1$ = the average tube to sample distance.

if we now consider the transmitted intensity of the secondary beam we can write

$$I_S(P_N,T_N) = I_{OS}\exp[-\mu_S\rho(P_N, T_N) t_2] \tag{4}$$

where

$I_S(P_N,T_N)$ = the transmitted secondary intensity in air at $P_N$ & $T_N$.

$I_{OS}$= the transmitted intensity of the secondary beam in vacuum.
$\mu_S$= the mass attenuation coefficient of the secondary beam in air (assuming the beam is monochromatic).
$\rho(P_N,T_N)$= the air density at $P_N$ & $T_N$.
$t_2$= the average detector to sample distance.

Next consider the intensity of an X-ray line from analyte $x$
Here we have to consider the multiplicative effect of both the primary and secondary beams as discussed on page 6, lines 22 to 27. Having done this we can write

$$I_X(P_N,T_N)=I_{OX}\exp[-\mu_X\rho(P_N,T_N)t_2]\{\exp[-\mu_P\rho(P_N,T_N)t_1]\} \qquad (5)$$

where

$I_X(P_N,T_N)$= the detected intensity of the analyte X-ray line in air at $P_N$ & $T_N$.
$I_{OX}$= the transmitted intensity of the analyte X-ray line in vacuum.
$\mu_X$= the mass attenuation coefficient of the analyte line in air.

Here the expression in curly brackets is just the multiplicative effect of the primary beam attenuation.
If we now consider the same analyte line measured at pressure $P$ and temperature $T$ we can write

$$I_X(P,T)=I_{OX}\exp[-\mu_X\rho(P,T)t_2]\{\exp[-\mu_P\rho(P,T)t_1]\} \qquad (6)$$

then rearranging equation (6) for $I_{OX}$ and substituting into (5) we get

$$I_X(P_N,T_N)=I_X(P,T)\exp[\mu_X\rho(P,T)t_2]\{\exp[\mu_P\rho(P,T)t_1]\}\exp[-\mu_X\rho(P_N,T_N)t_2]\{\exp[-\mu_P\rho(P_N,T_N)t_1]\}$$

$$\therefore I_X(P_N,T_N)=I_X(P,T)\exp[-\mu_X t_2(\rho(P_N,T_N)-\rho(P,T))]\exp[-\mu_P t_1(\rho(P_N,T_N)-\rho(P,T))]$$

$$= I_X(P,T)\exp[-\mu_X t_2\Delta\rho]\exp[-\mu_P t_1\Delta\rho]$$

$$\therefore \frac{I_X(P_N,T_N)}{I_X(P,T)} = \exp[-\mu_X t_2\Delta\rho]\exp[-\mu_P t_1\Delta\rho]$$

$$= \exp[-\Delta\rho(\mu_X t_2 + \mu_P t_1)] \quad ...... \quad (7)$$

where $\Delta\rho = (\rho(P_N,T_N)-\rho(P,T))$
Similarly, for a line measured from a standard, we can write

$$\therefore \frac{I_{STD}(P_N,T_N)}{I_{STD}(P,T)} = \exp[-\mu_{STD}t_2\Delta\rho]\exp[-\mu_P t_1\Delta\rho]$$

$$= \exp[-\Delta\rho(\mu_{STD} t_2 + \mu_P t_1)] \quad ...... \quad (8)$$

taking natural logs of both sides of (7) & (8) then dividing (7) by (8) we get

$$\frac{\ln \dfrac{I_{X}(P_{X},T_{X})}{I_{X}(P,T)}}{\ln \dfrac{I_{STD}(P_{X},T_{X})}{I_{STD}(P,T)}} = \frac{-\Delta\rho(\mu_{X}t_{2} + \mu_{r}t_{1})}{-\Delta\rho(\mu_{STD}t_{2} + \mu_{r}t_{1})}$$

$$\therefore \ln \frac{I_{X}(P_{X},T_{X})}{I_{X}(P,T)} = \ln\left[\left[\frac{I_{STD}(P_{X},T_{X})}{I_{STD}(P,T)}\right]^{\frac{(\mu_{X}t_{2}+\mu_{r}t_{1})}{(\mu_{STD}t_{2}+\mu_{r}t_{1})}}\right]$$

using the fact that n ln(x)=ln(x$^n$).

Then taking anti-logs of both sides

$$\therefore \frac{I_{X}(P_{X},T_{X})}{I_{X}(P,T)} = \left[\frac{I_{STD}(P_{X},T_{X})}{I_{STD}(P,T)}\right]^{\alpha} \quad \text{......} \quad (9)$$

where

$$\alpha = \frac{(\mu_{X}t_{2} + \mu_{r}t_{1})}{(\mu_{STD}t_{2} + \mu_{r}t_{1})}.$$

We wish to find $I_X(P_N, T_N)$,

$$\boxed{\therefore I_{X}(P_{X},T_{X}) = I_{X}(P,T) \times \left[\frac{I_{STD}(P_{X},T_{X})}{I_{STD}(P,T)}\right]^{\alpha}} \quad \text{........} \quad (10)$$

If we ignore the primary beam attenuation the $\alpha$ factor reduces to

$$\boxed{\alpha = \frac{\mu_{X}}{\mu_{STD}}.}$$

This is the case for Ca and Fe k X-rays as these are not excited by the characteristic L$\alpha$ line from the tube target, but rather from the continuum X-rays with energies >>4keV which are effectively not absorbed in the primary air path.

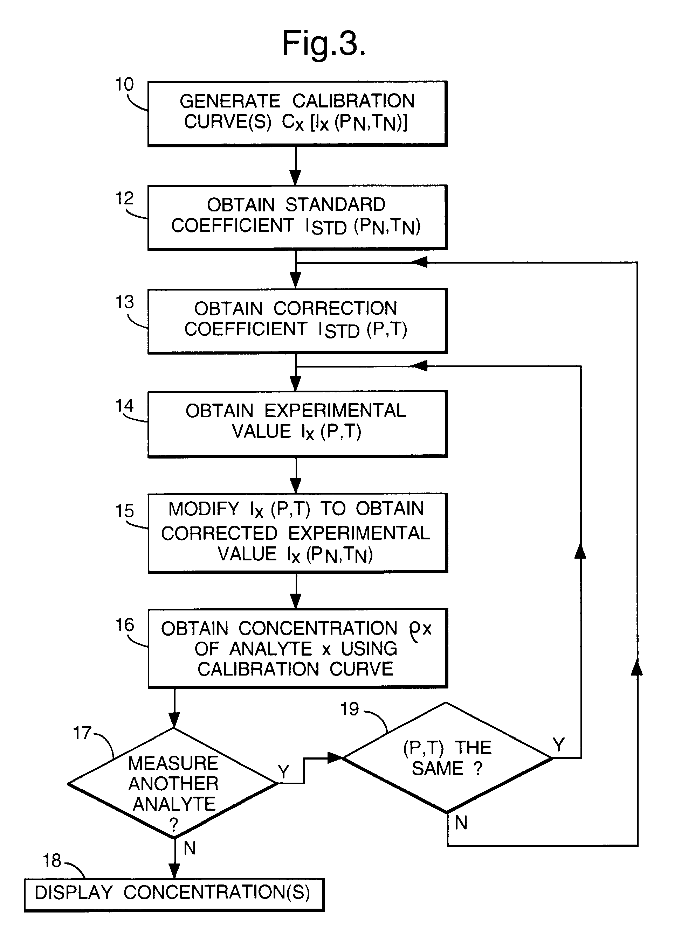

Figure 3 illustrates an example of a method of measuring the concentration of one or more analytes using the temperature and pressure correction factor previously described.

In a first step 10, one or more conventional calibration curves (which can be defined in terms of a function $F[I_X(P_N, T_N)]$) are generated. These can be generated in a number of different ways. For example, a calibration sample with a known analyte concentration can be placed in the apparatus and irradiated at a known temperature and pressure $P_N$, $T_N$. The intensity of the fluorescent X-rays at the emission frequency of the analyte is determined. The calibration sample is then replaced by a series of calibration samples with known, different analyte concentrations. The fluorescent X-ray intensity of each calibration sample is measured and used to plot an calibration curve for analyte x. Alternatively, only a single calibration sample may be used, and the form of the calibration curve may be in the form of a predetermined theoretical function. A calibration curve 11 of the form illustrated generally in Figure 4 is calculated in the step 10, and as a result the concentration $C_X$ ($P_N$, $T_N$) of an analyte x can be determined from the intensity $I_X$ at the calibration temperature and pressure $P_N, T_N$. However, this calibration curve will vary with experimental pressure and temperature if the apparatus is not purged with Helium. If further analytes are to be measured, then the procedure above is repeated for each additional analyte x.

In a second step 12, a standard sample (for instance pure aluminium) is analyzed to determine a standard coefficient $I_{STD}$ ($P_N, T_N$). That is, the X-ray fluorescence of the aluminium k X-ray line at 1.487keV is measured at the calibration pressure and temperature $P_N, T_N$. The standard coefficient is then stored for later use in a correction process.

Step 12 may be carried out once for each calibration curve, but in general if the calibration curves are all carried out under the same pressure and temperature conditions, then only a single standard coefficient will need to be measured.

Steps 10 and 12 may be carried out in the factory before delivery of the apparatus - the calibration curve and standard coefficient being stored in suitable memory. Alternatively steps 10 and 12 may be carried out by an experimentalist on receipt of the apparatus, or before performing a series of experiments.

The composition of an unknown sample is determined by carrying out an experimental procedure at an unknown pressure and temperature (P,T). Using the correction procedure described, the pressure and temperature does not need to be measured. In a first step 13, a correction coefficient $I_{STD}$ (P,T) is obtained. That is, the standard aluminium sample is analyzed to obtain an intensity value $I_{STD}$ (P,T) which will be different from the intensity value $I_{STD}$ ($P_N, T_N$) measured at 12 at a different temperature $P_N, T_N$. A sample to be analyzed is then placed in the apparatus and measured at 14 to give an experimental value $I_X$ (P,T). For instance, if the silicon content of the sample is to be measured, then the value $I_X$ (P,T) is the intensity of the silicon k line at 1.740keV. The experimental value is then modified at 15 to obtain a corrected experimental value $I_X$ ($P_N, T_N$) using the predetermined correction algorithm shown in equation 10.

The corrected experimental value can then be input to the calibration curve previously generated at 10 to derive a concentration value for the analyte X (in this case the concentration of silicon). This step is illustrated at 16.

As illustrated at 17, if no further analytes are to be measured, then the system displays the concentration of the measured analyte at 18. If further analytes are to be measured (either in the same sample or a different sample), then the experimentalist needs to determine at 19 whether the pressure and temperature have significantly altered from the pressure and temperature when the correction coefficient was last measured at 13. This decision may be made by measuring the pressure and temperature. Alternatively, if the correction coefficient was measured a short period of time previously, then it can be assumed that the pressure and temperature are substantially the same, and the procedure for the next analyte can be commenced at 14. Alternatively, if the experimentalist is not confident that the pressure and temperature are unchanged, then the correction coefficient $I_{STD}$ (P,T) can be measured again at 13 by analysing the standard aluminium sample.

Instead of measuring a single experimental value $I_x$ (P,T) at 14, a number of measurements for a number of analytes X may be measured at this stage.

An example of the use of the correction factor of equation (10) will now be described with reference to Table 1 and Table 2.

Table 1 shows the correction factor applied to the measurements of $Al_2O_3$ and $SiO_2$ in a $CaCO_3$ matrix. Pure Aluminium was chosen as the standard sample as Al is the most sensitive to the changes in air density when compared to Si, Ca and Fe. Firstly, $I_{STD}(P_N, T_N)$ was measured along with the $I_X(P_N, T_N)$ for each element for later comparison with the $I_X(P_N, T_N)$ values calculated using equation (10). Then, $I_X(P,T)$ and $I_{STD}(P,T)$ were measured at various values of P&T. The first column of $I_X(P_N, T_N)$ values were calculated with a factors calculated using the data in the table. These should be compared to the measured values and to the values calculated using empirical a factors. These empirical factors were calculated by rearranging equation (10) for $\alpha$ and substituting the measured count rates back in. The $\alpha$ factors were then averaged to obtain the empirical factor for each element.

Table 2 shows a similar analysis for a second experimental sample. However, the $\alpha$ factors for Ca and Fe were calculated using the reduced form of $\alpha = \mu_X/\mu_{STD}$ as described above.

The results in tables 1 and 2 clearly show that the correction procedure works for the analyte elements measured and is improved if empirically found $\alpha$ factors are used. The non unity value of $\alpha(Al)_{Empirical}(=0.8723)$ is due to the relatively high scattered background under the Al peaks in the experimental samples than is present under the Al peak from the standard sample. No empirical $\alpha$ factor was calculated for Fe as the effect of air path is so small on this element that it is lost in the counting statistics. It is, therefore, unnecessary to correct Fe count rates when measured in an air path.

**Barometric and Temperature Correction for $Al_2O_3$ and $SiO_2$ in $CaCO_3$.**

$P_N$=764 mm Hg
$T_N$=24.4°C

$$I(P_N,T_N) = I(P,T) \times \left[\frac{I_{sid}(P_N,T_N)}{I_{sid}(P,T)}\right]^{\alpha}$$

| | | |
|---|---|---|
| Al | $\alpha_{Empirical}$ | 0.8723 |
| Si | $\alpha_{Empirical}$ | 0.6604 |

$$\alpha = \frac{(|\mu L/\rho|+|\mu t|)}{(|\mu L/\rho|+|\mu t|)}$$

| | | |
|---|---|---|
| $\mu_{Al}$(cm²g⁻¹) | 1019.3 | |
| $\mu_{Si}$(cm²g⁻¹) | 653.8 | |
| $\mu_{P}$(cm²g⁻¹) | 164.5 | |
| $t_1$(cm) | 2.5 | |
| $t_2$(cm) | 1.3 | |
| IAGPS2  $I_{sid}(P_N,T_N)$ | 2531 | 100 sec |
| A1 | | |

| Low 4 keV 100μA | |
|---|---|
| Al Chls. | Si Chls |
| 40-85 | 50-95 |
| 100 sec | 50 sec |
| A1 | |

**10%$Al_2O_3$**

| $P$ (mm Hg) | $T$(°C) | $I_X(P,T)$ | $I_{sid}(P,T)$ | $I_X(P_N,T_N)$ | $\alpha_{Empirical}$ |
|---|---|---|---|---|---|
| 720 | 25.9 | 150 | 2998 | 127 | 129 |
| 730 | 26.3 | 145 | 2896 | 127 | 129 |
| 740 | 26.4 | 141 | 2818 | 127 | 128 |
| 750 | 24.4 | 134 | 2651 | 128 | 129 |
| | | Measured | | 129 | |

**20%$Al_2O_3$**

| $P$ (mm Hg) | $T$(°C) | $I_X(P,T)$ | $I_{sid}(P,T)$ | $I_X(P_N,T_N)$ | $\alpha_{Empirical}$ |
|---|---|---|---|---|---|
| 720 | 27.5 | 255 | 3043 | 212 | 217 |
| 730 | 28.0 | 247 | 2951 | 212 | 216 |
| 740 | 28.3 | 241 | 2839 | 215 | 218 |
| 750 | 28.5 | 234 | 2736 | 216 | 219 |
| | | Measured | | 218 | |

**10%$SiO_2$**

| $P$ (mm Hg) | $T$(°C) | $I_X(P,T)$ | $I_{sid}(P,T)$ | $I_X(P_N,T_N)$ | 100 sec O2 $I_X(P,T)$ | 100sec O2 $I_X(P_N,T_N)$ |
|---|---|---|---|---|---|---|
| 720 | 27.9 | 1618 | 3077 | 1404 | 229 | 199 |
| 730 | 29.3 | 1603 | 3001 | 1416 | 225 | 199 |
| 740 | 29.1 | 1560 | 2864 | 1426 | 219 | 200 |
| 750 | 28.9 | 1521 | 2761 | 1428 | 215 | 202 |
| | | Measured | | 1439 | Measured | 202 |
| | | | | $\alpha_{Empirical}$ | | $\alpha_{Empirical}$ |
| | | | | 1422 | | 201 |
| | | | | 1432 | | 201 |
| | | | | 1438 | | 202 |
| | | | | 1436 | | 203 |

**20%$SiO_2$**

| $P$ (mm Hg) | $T$(°C) | $I_X(P,T)$ | $I_{sid}(P,T)$ | $I_X(P_N,T_N)$ | 100 sec O2 $I_X(P,T)$ | 100sec O2 $I_X(P_N,T_N)$ |
|---|---|---|---|---|---|---|
| 720 | 24.8 | 2642 | 2968 | 2353 | 398 | 355 |
| 730 | 25.4 | 2612 | 2878 | 2379 | 390 | 355 |
| 740 | 26.0 | 2552 | 2774 | 2388 | 380 | 356 |
| 750 | 26.6 | 2492 | 2710 | 2371 | 371 | 353 |
| | | | | Measured | 2391 | Measured | 357 |
| | | | | | $\alpha_{Empirical}$ | $\alpha_{Empirical}$ |
| | | | | | 2378 | 358 |
| | | | | | 2400 | 358 |
| | | | | | 2402 | 358 |
| | | | | | 2382 | 355 |

Table 1.

EP 0 816 834 A2

08/02/96   MSF   Barometric and Temperature Correction

| | | | | |
|---|---|---|---|---|
| $\mu_{al}(cm \cdot g^{-1})$ | 1019.3 | | | |
| $\mu_{s}(cm \cdot g^{-1})$ | 653.8 | | | Al & Si: Low 4kV 100uA (A1 for Al). |
| $\mu_{ca}(cm \cdot g^{-1})$ | 164.5 | $P_v$=758 mm Hg | | Ca & Fe: High 19kV 30uA (A3 and M1). |
| $\mu_{fe}(cm \cdot g^{-1})$ | 90.3 | $T_v$=26.9°C | | |
| $\mu_{fe}(cm \cdot g^{-1})$ | 19.2 | | | |
| $t_1$(cm) | 2.5 | Al | $\alpha_{Empirical}$ | 0.8723 |
| $t_2$(cm) | 1.3 | Si | $\alpha_{Empirical}$ | 0.6604 |
| IAGPS2  $I_{STD}(P_v,T_v)$ | 2644 | Ca | $\alpha_{Empirical}$ | 0.0810 |

| | | | A1 120sec | A1 50sec | | |
|---|---|---|---|---|---|---|
| $Al_2O_3$ | $P$(mmHg) | $T$(°C) | $I_r(P,T)$ | $I_{STD}(P,T)$ | $I_r(P_v,T_v)$ | $\alpha_{Empirical}$ |
| 4.70% | 720 | 27.6 | 121 | 3040 | 105 | 107 |
| Channels | 730 | 28.5 | 118 | 2935 | 106 | 108 |
| 40-85 | 740 | 28.6 | 116 | 2859 | 107 | 108 |
| | 750 | 29.2 | 113 | 2762 | 108 | 109 |
| | | | Measured | 108 | | |

| | | 50sec | A1 50sec | | O2 100sec | O2 | | O2 | |
|---|---|---|---|---|---|---|---|---|---|
| $P$(mmHg) | $T$(°C) | $I_r(P,T)$ | $I_{STD}(P,T)$ | $I_r(P_v,T_v)$ | $I_r(P,T)$ | $I_r(P_v,T_v)$ | $\alpha_{Empirical}$ | $\alpha_{Empirical}$ | $SiO_2$ |
| 720 | 27.6 | 2708 | 3040 | 2447 | 379 | 342 | 2470 | 346 | 18.12% |
| 730 | 28.5 | 2649 | 2935 | 2456 | 372 | 345 | 2472 | 347 | Channels |
| 740 | 28.6 | 2590 | 2859 | 2447 | 365 | 345 | 2460 | 347 | 50-95 |
| 750 | 29.2 | 2536 | 2762 | 2457 | 357 | 346 | 2464 | 347 | |
| | | Measured | 2456 | Measured | 347 | | | | |

| | | | A3 M1 30s | A1 50sec | | |
|---|---|---|---|---|---|---|
| CaO | $P$(mmHg) | $T$(°C) | $I_r(P,T)$ | $I_{STD}(P,T)$ | $I_r(P_v,T_v)$ | $\alpha_{Empirical}$ |
| 38.60% | 720 | 27.6 | 16897 | 3040 | 16689 | 16707 |
| Channels | 730 | 28.5 | 16856 | 2935 | 16701 | 16714 |
| 40-73 | 740 | 28.6 | 16831 | 2859 | 16715 | 16725 |
| | 750 | 29.2 | 16854 | 2762 | 16789 | 16794 |
| | | | Measured | 16717 | | |

| | | | A3 M1 30s | A1 50sec | |
|---|---|---|---|---|---|
| $Fe_2O_3$ | $P$(mmHg) | $T$(°C) | $I_r(P,T)$ | $I_{STD}(P,T)$ | $I_r(P_v,T_v)$ |
| 2.27% | 720 | 27.6 | 6468 | 3040 | 6451 |
| Channels | 730 | 28.5 | 6467 | 2935 | 6454 |
| 76-110 | 740 | 28.6 | 6489 | 2859 | 6479 |
| | 750 | 29.2 | 6498 | 2762 | 6493 |
| | | | Measured | 6476 | |

Table 2.

## Claims

1.  A method of obtaining information concerning the content of an experimental sample, the method comprising

    (i) irradiating a standard sample with X-rays and monitoring fluorescent X-rays emitted by the standard sample to obtain a correction coefficient $I_{STD}$ related to the intensity of the monitored X-rays;
    (ii) irradiating the experimental sample under substantially the same experimental conditions as in step (i) with X-rays and monitoring fluorescent X-rays emitted by the experimental sample to obtain one or more experimental values $I_x$, each experimental value being related to the intensity of the monitored X-rays corresponding to a particular analyte; and

(iii) obtaining the information concerning the content of the experimental sample in accordance with an algorithm incorporating the experimental value $I_x$, a calibration curve for the or each analyte and the correction coefficient $I_{STD}$,

wherein the correction coefficient $I_{STD}$ is used to correct for any difference between the experimental conditions prevailing in steps (i) and (ii) and the calibration experimental conditions associated with the calibration curve.

2. A method of performing a sequential series of experiments, each experiment obtaining information concerning the content of an experimental sample, the method comprising for each experiment performing a method according to claim 1, wherein a correction coefficient $I_{STD}$ is obtained for each experiment.

3. A method according to claim 1 or 2 wherein the correction coefficient modifies the form of the calibration curve.

4. A method according to claim 1 or 2 wherein the correction coefficient modifies the experimental value $I_x$.

5. A method according to any of the preceding claims further comprising

(iv) irradiating a calibration sample having a known content under calibration experimental conditions with X-rays and monitoring fluorescent X-rays emitted by the calibration sample to obtain a calibration coefficient related to the intensity of the monitored X-rays;

(v) generating the calibration curve in accordance with the calibration coefficient obtained in step (iv); and

(vi) irradiating the standard sample under substantially the same experimental conditions as in step (iv) with X-rays and monitoring fluorescent X-rays emitted by the standard sample to obtain a standard coefficient related to the intensity of the monitored X-rays,

wherein the algorithm incorporates the standard coefficient which is used in conjunction with the correction coefficient to correct for any difference between the experimental conditions prevailing in steps (i) and (ii) and the calibration experimental conditions prevailing in steps (iv) and (vi).

6. A method according to claim 5, wherein steps (iv)-(vi) are performed before steps (i)-(iii).

7. A method according to claim 5 or 6 when dependent on at least claim 2, wherein steps (v) and (vi) are performed once only for the series of experiments.

8. A method according to any of the preceding claims wherein the experimental conditions comprise the sample temperature.

9. A method according to any of the preceding claims wherein the experimental conditions comprise the pressure along the path of the X-rays.

10. A method according to any of the preceding claims wherein the method is performed in air.

11. A method according to claim 9 and 10 wherein the pressure comprises the barometric pressure.

12. A method according to any of the preceding claims, wherein the algorithm incorporates a predetermined factor $\alpha$ which varies in accordance with the analyte being measured.

13. A method according to claim 12, wherein

$$\alpha = \frac{(\mu_x t_2 + \mu_p t_1)}{(\mu_{STD} t_2 + \mu_p t_1)}$$

where $\mu_x$ is a mass attenuation coefficient corresponding with the analyte being measured, $\mu_{STD}$ is a mass attenuation coefficient corresponding with the standard sample, $\mu_p$ is a mass attenuation coefficient of a primary X-ray beam incident on the sample, $t_1$ is the path length of the primary X-ray beam and $t_2$ is the path length of the fluorescent X-rays.

14. A method according to claim 13, wherein the algorithm is $C_X = F[I_X(P_N, T_N)]$ where $C_X$ is the concentration of analyte X in the experimental sample, F is a function defining the calibration curve, $I_X(P_N, T_N)$ is the intensity of the fluorescent X-rays emitted by the experimental sample at a wavelength associated with the analyte x, and at a pressure $P_N$ and temperature $T_N$, where $P_N$ is the calibration air pressure and $T_N$ is the calibration temperature, and wherein

$$I_x(P_N, T_N) = I_x(P, T) * \left[ \frac{I_{STD}(P_N, T_N)}{I_{STD}(P, T)} \right]^\alpha$$

where $I_X(P,T)$ is the intensity of the fluorescent X-rays emitted by the experimental sample at the wavelength associated with the analyte x and at the experimental pressure P and experimental temperature T, $I_{STD}(P_N, T_N)$ is the intensity of fluorescent X-rays emitted by the standard sample at a chosen wavelength and at the calibration pressure $P_N$ and calibration temperature $T_N$, and $I_{STD}(P,T)$ is the correction coefficient obtained in step (i) comprising the intensity of the fluorescent X-rays emitted by the standard sample at the chosen wavelength and at the experimental pressure P and experimental temperature T.

15. Apparatus for obtaining information concerning the content of an experimental sample comprising means for irradiating the experimental sample; means for monitoring fluorescent X-rays emitted by the experimental sample to obtain an experimental value related to the intensity of the monitored X-rays; and means for obtaining the information concerning the content of the experimental sample in accordance with a calibration algorithm which incorporates the experimental value, wherein in use the X-rays pass through air.

# Fig.1.

# Fig.4.

# Fig.2.

# Fig.3.

```
10 ┌─────────────────────────────┐
   │   GENERATE  CALIBRATION     │
   │   CURVE(S)  Cx [lx (PN,TN)] │
   └─────────────────────────────┘
                  │
                  ▼
12 ┌─────────────────────────────┐
   │      OBTAIN  STANDARD       │
   │   COEFFICIENT  ISTD (PN,TN) │ ◄─────────────────┐
   └─────────────────────────────┘                   │
                  │                                   │
                  ▼                                   │
13 ┌─────────────────────────────┐                   │
   │     OBTAIN  CORRECTION      │                   │
   │    COEFFICIENT  ISTD (P,T)  │ ◄────────────┐    │
   └─────────────────────────────┘              │    │
                  │                             │    │
                  ▼                             │    │
14 ┌─────────────────────────────┐             │    │
   │     OBTAIN  EXPERIMENTAL     │             │    │
   │        VALUE  lx (P,T)       │             │    │
   └─────────────────────────────┘             │    │
                  │                             │    │
                  ▼                             │    │
15 ┌─────────────────────────────┐             │    │
   │   MODIFY  lx (P,T) TO OBTAIN │             │    │
   │   CORRECTED  EXPERIMENTAL    │             │    │
   │      VALUE  lx (PN,TN)       │             │    │
   └─────────────────────────────┘             │    │
                  │                             │    │
                  ▼                             │    │
16 ┌─────────────────────────────┐             │    │
   │   OBTAIN CONCENTRATION ℓx    │             │    │
   │    OF ANALYTE x USING        │             │    │
   │    CALIBRATION CURVE         │             │    │
   └─────────────────────────────┘             │    │
                  │                             │    │
                  ▼                        19   │    │
17        ◇                           ◇         │    │
       ╱ MEASURE ╲      Y        ╱ (P,T) THE ╲  Y    │
      ╱  ANOTHER  ╲────────────►╱   SAME  ?   ╲──────┘
      ╲  ANALYTE  ╱             ╲             ╱
       ╲    ?    ╱               ╲           ╱
          ◇                         ◇ N
          │ N                          │
          ▼                            └──────────────┘
18 ┌───────────────────────────────┐
   │ DISPLAY CONCENTRATION(S)       │
   └───────────────────────────────┘
```